# EUROPEAN PATENT APPLICATION

(11) **EP 1 331 550 A2**
(43) Date of publication of application: **30.07.2003**
(21) Application number: 03001296.7
(22) Date of filing: 22.01.2003
(51) Int. Cl.: G06F 3/14

(54) **Visualization processing system, visualization processing method, and visualization processing program product**

(30) Priority: 23.01.2002 JP 2002014600
(71) Applicant: President, Kyoto University, Kyoto (JP)
(72) Inventor: Kunugi, Tomoaki, 1121, Fujinomori-Godo-Shukusha, Kyoto-shi, Kyoto-fu (JP); Yoshikawa, Masaaki, Tama-shi, Tokyo (JP)
(74) Representative: Hertz, Oliver, Dr.

(57) **Abstract**

A system of this invention includes terminals (51, 61) each of which makes a display device display a visualized image on the basis of visualized image data, and a main Web server (11) which is connected to the terminals (51, 61) via a network (1000), assigns a visualization job ID used to identify a visualization job to a visualization request from the terminal (51, 61) in response to that visualization request, manages the visualization job by associating visualized image data with the visualization job ID, displays selectable visualization jobs, visualized images of which are being displayed on any of the terminals (51, 61), on the display device of the terminal (51, 61) to prompt the user to select a desired visualization job, acquires visualized image data associated with the visualization job ID selected by the user, and controls to transmit the visualized image data to the terminal (51, 61).

## Description

The present invention relates to a visualization processing system, visualization processing method, and visualization processing program product, which allow a plurality of terminals to share identical screen contents.

In a typical example of a distributed processing system using the Internet, the following processes are executed. A server delivers various processing programs, and data segmented for these programs. Each client, which is connected to this server via a network, launches the delivered program. The client processes data delivered from the server using that program, and transmits the processing result to the server.

In a system that adopts such distributed processing form, when each user variously changes a display condition, he or she stores and processes a set of display data, a program, and data that specifies the display condition in his or her terminal. Therefore, when a program that runs on each of terminals, which are distributed and connected on a single, continuous network, is to be used by each terminal, each user must access and control a predetermined terminal.

It is an object of the present invention to provide a distributed processing system, distributed processing method, and distributed processing program product, which allow sharing and re-use of data.

In an aspect of the present invention, there is provided a visualization processing system comprising: a plurality of terminals each of which comprises an image display device that makes a display device display a visualized image on the basis of visualized image data; user management means, connected to the plurality of terminals via a network, for assigning visualization job IDs used to identify visualization jobs to visualization requests from the terminals, managing the visualization jobs by associating visualized image data with the visualization job IDs, and controlling to transmit visualized image data to the terminals; and collaboration management means for displaying selectable visualization jobs, visualized images of which are being displayed on any of the plurality of terminals, on the display device of the terminal to prompt a terminal user to select a desired visualization job, and issuing an acquisition request of visualized image data associated with the visualization job ID selected by the terminal user to the user management means.

In another aspect of the invention, there is provided a visualization processing system comprising: a plurality of terminals, each of which comprises visualization processing means for executing a visualization process on the basis of visualization basis data, and generating visualized image data, and an image display device for making a display device displays a visualized image on the basis of the visualized image data; user management means, connected to the plurality of terminals via a network, for assigning visualization job IDs used to identify visualization jobs to visualization requests from the terminals, managing the visualization jobs by associating visualized image data with the visualization job IDs, and controlling to transmit visualized image data to the terminals; and collaboration management means for displaying selectable visualization jobs, visualized images of which are being displayed on any of the plurality of terminals, on the display device of the terminal to prompt a terminal user to select a desired visualization job, and issuing an acquisition request of visualized image data associated with the visualization job ID selected by the terminal user to the user management means.

With this arrangement, by utilizing that a terminal used by a remote user is connected to a common network, each user can use a terminal regardless of a user assigned to that terminal, and can share its display screen with those of other users.

The present invention which relates to a system (apparatus) is also achieved as the invention of a method implemented by that apparatus.

Also, the present invention which relates to an apparatus or method is also achieved as a program for making a computer execute a sequence corresponding to that invention (or for making a computer function as means corresponding to that invention, or for making a computer implement functions corresponding to that invention), and a computer-readable recording medium which records the program, i.e., a program product. This program product includes a recording medium, and a program code which is recorded on this recording medium, and gives instructions to a computer that embodies processes implemented by the above system.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the network arrangement of a distributed processing system according to the first embodiment of the present invention;
FIG. 2 is a block diagram showing an outline of processes of terminals, servers, and programs of the whole system implemented by the network arrangement according to the first embodiment;
FIG. 3 is a block diagram showing the arrangement and detailed processing contents of an external processing system according to the first embodiment;
FIG. 4 is a block diagram showing the arrangement and detailed processing contents of a simulation system according to the first embodiment;
FIG. 5 is a block diagram showing the arrangement and detailed processing contents of a visualization processing system according to the first embodiment;
FIG. 6 is a block diagram showing the detailed arrangement of a user A terminal according to the first embodiment;
FIG. 7 is a sequence chart of the first use example that newly displays a visualized image according to the first embodiment;
FIG. 8 is a sequence chart of the second use example that reproduces archive data according to the first embodiment;
FIG. 9 is a sequence chart of the third use example that uses the distributed processing system according to the first embodiment in collaboration; and
FIG. 10 shows a screen display example of a collaboration list according to the first embodiment.

Preferred embodiments of the present invention will be described below with reference to the accompanying drawings. Note that embodiments to be described below will explain an example that executes an atmosphere-ocean simulation, and displays that simulation result on a display screen of each terminal, for the sake of understanding of the present invention.

### (First Embodiment)

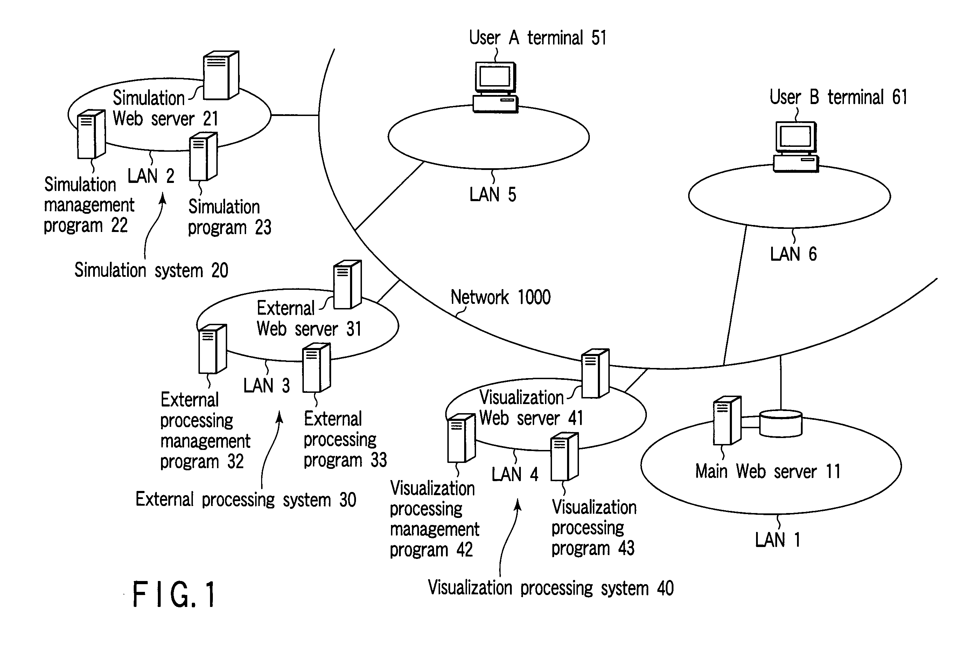

FIG. 1 shows the network arrangement of a distributed processing system according to the first embodiment of the present invention. As shown in FIG. 1, LANs 1 to 6 are connected to a network 1000.

A main Web server 11 is connected to the LAN 1. A simulation Web server 21, simulation management program 22, and simulation program 23 are connected to the LAN 2. An external Web server 31, external processing management program 32, and external processing program 33 are connected to the LAN 3. A visualization Web server 41, visualization management program 42, and visualization processing program 43 are connected to the LAN 4. A user A terminal 51 is connected to the LAN 5. A user B terminal 61 is connected to the LAN 6.

All the terminals, servers, or programs are connected to the network 1000 to make data communications, thus forming an environment in which data and programs can be shared with each other. In the following description, "a program is connected to a network" means that a computer such as a terminal, server, or the like, which has the program, is connected to the network. Therefore, this embodiment can be applied independently of a computer which executes this program.

A computer system formed by the simulation Web server 21, simulation management program 22, and simulation program 23 will be referred to as a simulation system 20 hereinafter. A computer system formed by the external Web server 31, external processing management program 32, and external processing program 33 will be referred to as an external processing system 30 hereinafter. A computer system formed by the visualization Web server 41, visualization management program 42, and visualization processing program 43 will be referred to as a visualization processing system 40 hereinafter.

In FIG. 1, the programs and server which form each of these systems 20, 30, and 40 are connected to a single LAN for each system, and such LANs are connected via the network. However, the present invention is not limited to such specific arrangement.

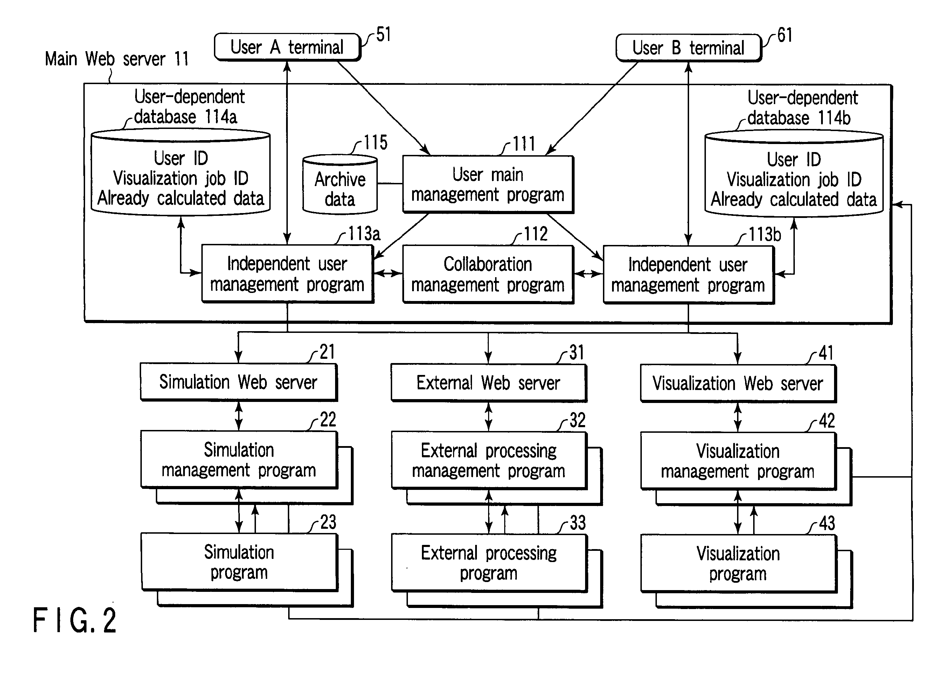

FIG. 2 shows an outline of processes of the terminals, servers, and programs of the whole system implemented by the network arrangement shown in FIG. 1. As shown in FIG. 2, the main Web server 11 has a user main management program 111 and collaboration management program 112.

In the following description, when a program is provided to a computer such as a server, terminal, or the like, the computer stores such program in, e.g., a storage device or the like to be able to execute that program, and is ready to execute the program in response to an execution instruction.

### [Arrangement of Main Web Server 11]

The user main management program 111 receives various data from the user A terminal 51 and user B terminal 61, and transmits various data to the user A terminal 51 and user B terminal 61.

The user main management program 111 generates an individual user management program for each user in response to the first access from a user. FIG. 2 shows an example wherein an individual user management program 113a used to manage a visualization job with user A is generated in response to access from the user A terminal 51, and an individual user management program 113b used to manage a visualization job with user B is generated in response to access from the user B terminal 61.

A visualization job indicates a job which provides a visualized image file to the user A terminal 51 or user B terminal 61 in response to a request from that terminal. Each visualization job is assigned a visualization job ID. Respective visualization jobs are identifiably managed by the visualization job IDs.

The individual user management programs 113a and 113b are generated only when it is determined based on, e.g., corresponding user IDs that authentication has succeeded. When it is determined that authentication has failed, no individual user management program is generated. The user who is not authorized cannot use the system of the present invention.

The user main management program 111 executes authentication. The user main management program 111 compares the user ID sent from the user A terminal 51 or user B terminal 61 with that registered in an authentication database provided to the main Web server 11.

As a result of comparison, if it is determined that authentication has failed, access from the corresponding terminal is denied. If it is determined that authentication has succeeded, the main management program 111 generates an individual user management program 113a assigned the user ID. In this way, a visualization process can be managed for each user ID. The individual user management programs 113a and 113b are generated in response to user's access, and quit upon completion of user's access. The user main management program 111 manages the execution states of the individual user management programs 113a and 113b on the basis of execution state data transmitted from these programs 113a and 113b.

The individual user management program 113a or 113b is assigned a user-dependent database 114a or 114b for each terminal. The user-dependent database 114a or 114b stores, for each terminal, input/output information, the user ID, and the visualization job ID associated with the corresponding user A terminal 51 or user B terminal 61, and various data (calculation basis data, external process data, visualization basis data, visualized image file, and the like) exchanged or generated by that visualization job. The database is assigned by assuring a predetermined area of a storage device provided to the main Web server 11 for each user.

An archive database 115 is connected to the user main management program 111. This archive database 115 stores the already calculated simulation result, external process data, visualized image file, and the like as archive data. The archive data is appended with the visualization job ID. In this way, the archive data can be read out from the archive database 115 using the visualization job ID as a key when that data is to be re-used.

The collaboration management program 112 executes a collaboration management process on the basis of a collaboration management instruction.

The collaboration management program 112 executes a collaboration management process in response to a request from the individual user management program 113a or 113b.

A first collaboration management process generates a visualization job list, and outputs that visualization job list to the individual user management programs 113a and 113b.

A second collaboration management process is a collaboration execution process executed in response to collaboration requests from the individual user management programs 113a and 113b.

The first collaboration management process generates a visualization job list by searching for visualization jobs, which are being executed on the main Web server 11, in response to a visualization job list request from the individual user management program 113a or 113b. The collaboration management program 112 outputs that visualization job list to the individual user management program 113a or 113b as the request source. The individual user management program 113a or 113b that has acquired the job list transmits the acquired visualization job list to the corresponding user terminal 51 or 61. The visualization job list may be generated by choosing only visualization jobs that the user has been granted a permission of collaboration, in accordance with his or her user ID. Alternatively, a collaboration password may be set in advance, and a collaboration request from a user other than those who have that collaboration password may be denied.

The second collaboration management process will be explained below taking as an example collaboration between the individual user management programs 113a and 113b. For example, when user A is executing a visualization job, and user B requests to share the visualization job of user A, the individual user management program 113b receives a collaboration request from the user B terminal 61.

In response to this collaboration request, the individual user management program 113b sends an acquisition instruction of a visualized image file corresponding to the visualization job ID of user A to the collaboration management program 112. Upon reception of this acquisition instruction, the collaboration management program 112 sends an acquisition request of a visualized image file of the visualization job of user A to the individual user management program 113a. The individual user management program 113a outputs the visualized image file to the collaboration management program 112 in response to this acquisition request of the visualized image file. The collaboration management program 112 transmits the visualized image file to the individual user management program 113b. The individual user management program 113b transmits the acquired visualized image file to the user B terminal 61.

In the user B terminal 61, a visualized image is displayed on a display device on the basis of the visualized image file. The visualized image is same as that visualized on the user A terminal 51. In this manner, a plurality of terminals can share identical screen information.

In this example, collaboration between users A and B has been explained. However, the number of users who collaborate with each other is not limited to two, but three or more users may collaborate with each other.

### [Arrangement and Details of Process of External Processing System 30]

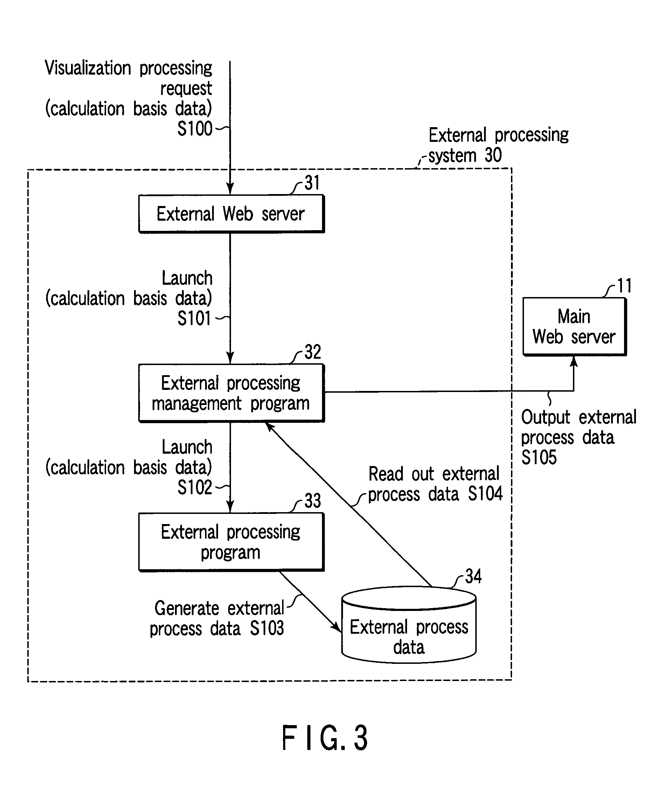

FIG. 3 shows the arrangement and detailed processing contents of the external processing system 30. As shown in FIG. 3, the external processing system 30 comprises the external Web server 31, the external processing management program 32, the external processing program 33, and an external process database 34.

The external Web server 31 receives an external processing request from the individual user management program 113a or 113b. Together with this external processing request, the external Web server 31 receives calculation basis data from the individual user management program 113a or 113b (s100). The external Web server 31 generates an external processing management program 32 in response to the external processing request. The external Web server 31 issues an external processing management request by outputting the calculation basis data to the external processing management program 32 (s101). Upon receiving this external processing management request, the external processing management program 32 issues an external processing instruction by outputting the calculation basis data to the external processing program 33 (s102). Upon receiving this external processing instruction, the external processing program 33 executes an external process on the basis of the calculation basis data, and acquires external process data.

The external process indicates a process other than those executed by the simulation system 20 and visualization processing system 40. For example, the external process includes, in case of the atmosphere-ocean simulation, generation of an initial field required for the simulation, i.e., initial parameters, generation of mesh information and a boundary condition used in calculations, generation of an acquisition condition of satellite observation data, generation of control data upon executing the simulation or visualization process, generation of a confirmation condition of an execution state, and the like.

The external process data acquired in this way is stored in the external process data base (s103). The external processing management program 32 monitors the execution state from launch to completion of the external processing program 33. When the external processing management program 32 confirms that the process of the external processing program 33 is complete, the external processing management program 32 reads out the external process data from the external process database 34 (s104), and outputs the readout data to the main Web server 11 (s105). In this manner, the external process is completed. Upon completion of the external process, the external processing management program 32 is cleared.

Note that the external Web server 31 may monitor the execution state of the external process in addition to the external processing management program 32, and may inform, e.g., the individual user management program 113a or 113b of the main Web server 11 of that execution state.

### [Arrangement of Simulation System 20]

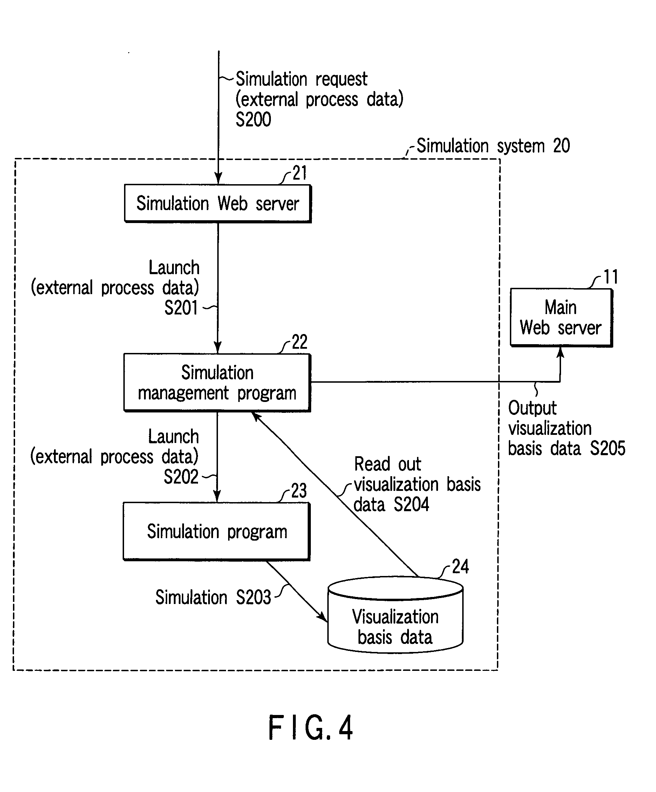

FIG. 4 shows the arrangement and detailed processing contents of the simulation system 20. As shown in FIG. 4, the simulation system 20 comprises the simulation Web server 21, the simulation management program 22, the simulation program 23, and a visualization basis database 24.

The simulation Web server 21 receives a simulation request from the individual user management program 113a or 113b. Together with this simulation request, the simulation Web server 21 receives the external process data from the individual user management program 113a or 113b (s200). The external process data is obtained by the external process executed by the external processing system 30. The simulation Web server 21 generates a simulation management program 22 in response to the simulation request. The simulation Web server 21 issues a simulation management request by outputting the external process data to the simulation management program 22 (s201). The simulation management program 22 issues a simulation instruction by outputting the external process data to the simulation program 23 in response to that simulation management request (s202). Upon receiving the simulation instruction, the simulation program 23 executes a visualization basis data generation simulation on the basis of the external process data, and acquires visualization basis data as a simulation result.

In case of the atmosphere-ocean simulation, for example, the simulation includes a virtual three-dimensional (3D) space process or the like. In this case, the virtual 3D space process simulation can acquire virtual 3D space data of a given object as visualization basis data.

The visualization basis data acquired in this way is stored in the visualization basis database 34 (s203). The simulation management program 22 monitors the execution state from launch to completion of the simulation program 23. When the simulation management program 22 confirms that the simulation program 23 has output the visualization basis data, the simulation management program 22 reads out the visualization basis data from the simulation database 24 (s204), and outputs the readout data to the main Web server 11 (s205). The simulation program 23 outputs a plurality of visualization basis data until a predetermined condition is met or until it is forcibly closed by user's designation since the program 23 is launched, and then quits. Upon completion of the simulation, the simulation management program 22 is cleared.

Note that the simulation Web server 21 may also monitor the execution state of the simulation in addition to the simulation management program 22, and may inform, e.g., the individual user management program 113a or 113b of the main Web server 11 of that execution state.

### [Arrangement of Visualization Processing System 40]

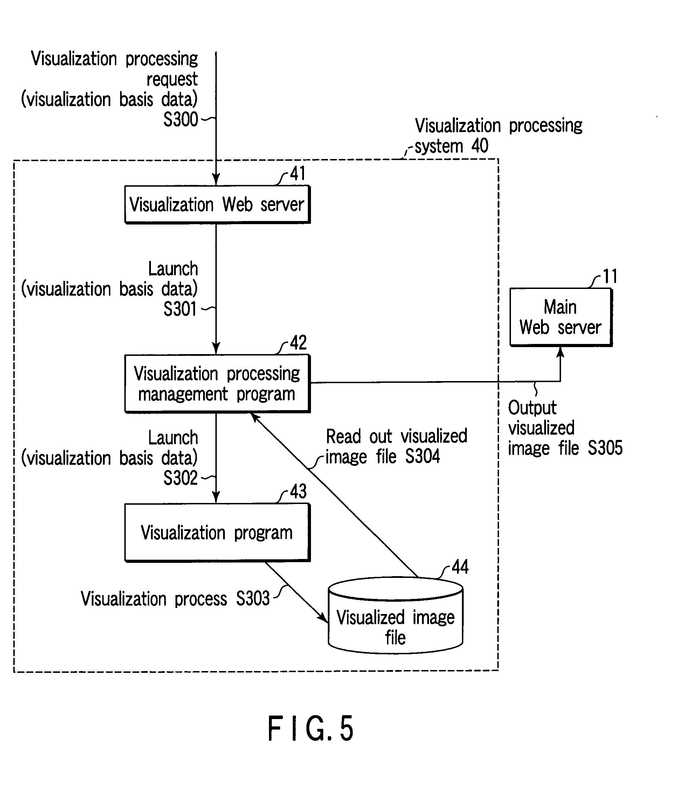

FIG. 5 shows the arrangement and detailed processing contents of the visualization processing system 40. As shown in FIG. 5, the visualization processing system 40 comprises the visualization Web server 41, the visualization management program 42, the visualization processing program 43, and a visualized image database 44.

The visualization Web server 41 receives a visualization processing request from the individual user management program 113a or 113b. Together with this visualization processing request, the visualization Web server 41 receives the visualization basis data from the individual user management program 113a or 113b (s300). The visualization basis data is obtained by the simulation executed by the simulation system 20. The visualization Web server 41 generates a visualization processing management program 42 in response to the visualization processing request. The visualization Web server 41 issues a visualization processing management request by outputting the visualization basis data to the visualization processing management program 42 (s301). Upon reception of this visualization processing management request, the visualization processing management program 42 issues a visualization processing instruction by outputting the visualization basis data to the visualization processing program 43 (s302). In response to the visualization processing instruction, the visualization processing program 43 executes a visualization process on the basis of the visualization basis data, and acquires a visualized image file.

In case of the atmosphere-ocean simulation, for example, the visualization process includes generation of object information expressed by virtual 3D space processing information, i.e., in a virtual 3D space, obtained based on the virtual 3D space processing data, which is obtained by the virtual 3D space processing simulation, and the like. In this manner, a 3D image file associated with an object expressed in the virtual 3D space is generated.

The visualized image file acquired in this manner is stored in the visualized image database 44 (s303). The visualization processing management program 42 monitors the execution state from launch to completion of the visualization processing program 43. When the visualization processing management program 42 confirms that the visualization processing program 43 has output visualized image data, the visualization processing management program 42 reads out the visualized image file from the visualized image database 44 (s304), and outputs the readout file to the main Web server 11 (s305). The visualization processing program 43 quits when the user logs out the system or does not execute any process for a predetermined period of time since it is launched. Upon completion of the visualization process, the visualization processing management program 42 is cleared.

Note that the visualization Web server 41 may also monitor the execution state of the visualization process in addition to the visualization processing management program 42, and may inform, e.g., the individual user management program 113a or 113b of the main Web server 11 of that execution state.

### [Arrangement of Terminals 51 and 61]

The detailed arrangement of the user A terminal 51 and user B terminal 61 will be explained below. Since the user A terminal 51 and user B terminal 61 have the same arrangement, the following explanation will be given taking the user A terminal 51 as an example.

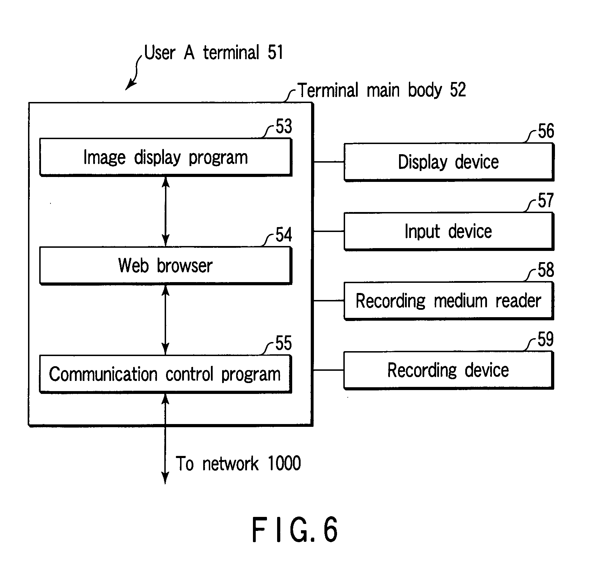

FIG. 6 shows the detailed arrangement of the user A terminal 51. The user A terminal 51 comprises a terminal main body 52, image display program 53, Web browser 54, communication control program 55, display device 56, input device 57, recording medium readout device 58, and recording device 59.

The image display program 53 is a program which makes the display device 56 display on the basis of an image file acquired via the Web browser 54. The Web browser 54 is a program which exchanges data such as an HTML file and the like with the Web server under the control of the communication control program 55. These image display program 53, Web browser 54, and communication control program 55 are installed in the terminal main body 52. The display device 56, input device 57, recording medium readout device 58, and recording device 59 are connected to the terminal main body 52.

Programs required for a terminal-side visualization process of this embodiment, such as the image display program 52, communication control program 55, a main program, and the like are stored in the recording device 59, and the terminal main body 52 reads out and executes such programs as needed. The recording medium readout device 58 may read out such programs from a recording medium on the basis of an instruction of the terminal main body 52, which may execute the readout programs. The main program displays a window required to exchange data with the main Web server 11 on the display device 56, and various other processes required to execute visualization on the terminal side, in addition to the image display process.

When data is transmitted from the user A terminal 51 to the main Web server 11, the Web browser 54 is launched first. Then, HTML data or the like input by the input device 57 is transmitted onto the network 1000 via the communication control program 55.

When the user A terminal 51 receives data from the main Web server 11, the communication control program 55 outputs HTML data received via the network 1000 to the Web browser 54. The Web browser 54 issues an image display processing instruction to the image display program 53 as needed on the basis of the received HTML data, and displays data on the display device 56.

In the aforementioned distributed processing system, data communications between the terminal 51 or 61 having the Web browser 54, and the Web server 11, or data communications among the Web servers 11, 21, 31, and 41 are implemented by the HTTP protocol. Processing results of programs in a single computer are input/output using a data format of an ASCII character string by, e.g., outputting such result to an ASCII file. For the data communications among the Web servers 11, 21, 31, and 41 or between the terminal 51 or 61 and the Web server 11, this ASCII character string is converted into an HTML file.

### [Visualization Process]

Use examples of the distributed processing system of this embodiment will be described below. The first use example is an example for newly displaying a visualized image on the terminal side, the second use example is an example for displaying the already acquired visualized image on the terminal again, and the third example is an example used in collaboration.

### [First Use Example (New Visualization)]

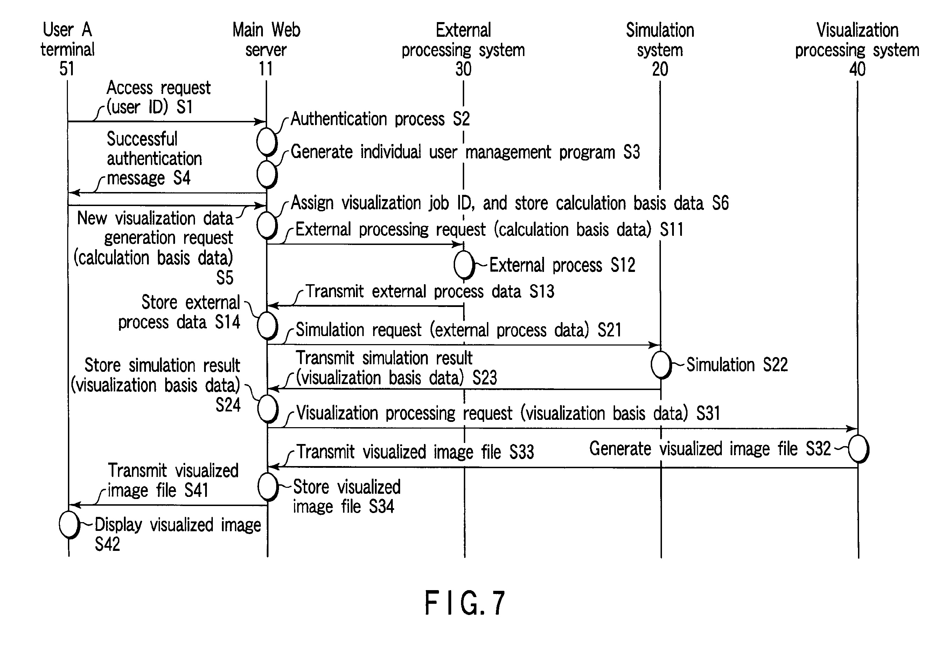

The first use example that newly displays a visualized image will be explained below using the sequence chart of FIG. 7.

The user A terminal 51 issues an access request to the main Web server 11 (s1). The user A terminal 51 transmits this access request together with the user ID assigned in advance to user A. The main Web server 11 executes an authentication process based on the received user ID (s2). If it is determined that authentication has succeeded, the user main management program 111 of the main Web server 11 generates an individual user management program 113a (s3). The individual user management program 113a of the main Web server 11 then sends a successful authentication message to the user A terminal 51 (s4).

Together with this successful authentication message, the display device 56 displays a main window provided based on data sent from the main Web server 11 or by the main program. This main window prompts user A to select one of "generation of new data" and "reproduction of archive data". If user A has selected "generation of new data" on the main window, the display device 56 then displays a calculation basis data input window. If user A has input data on this calculation basis data input window using the input device 57, the calculation basis data is transmitted to the main Web server 11, thus issuing a new visualization data generation request to the main Web server 11 (s5).

Upon receiving this new visualization data generation request, the main Web server 11 assigns a visualization job ID to that request. The main Web server 11 stores the received calculation basis data in the user-dependent database 114a in association with the visualization job ID and user ID (s6).

The main Web server 11 then issues an external processing request to the external processing system 30 (s11). Together with this external processing request, the calculation basis data is transmitted to the external Web server 31 of the external processing system 30. Upon reception of this external processing request, the external processing system 30 executes the external process shown in FIG. 3 (s12), and transmits external process data as the external processing result to the main Web server 11 (s13). The individual user management program 113a of the main Web server 11 stores the received external process data in the user-dependent database 114a (s14).

The main Web server 11 issues a simulation request to the simulation system 20 (s21). Together with this simulation request, the external process data is transmitted to the simulation Web server 21 of the simulation system 30. Upon receiving this simulation request, the simulation system 20 executes simulation shown in FIG. 4 (s22), and transmits visualization basis data as a simulation result to the main Web server 11 (s23). The individual user management program 113a of the main Web server 11 stores the received visualization basis data in the user-dependent database 114a (s24).

The main Web server 11 sends a visualization processing request to the visualization processing system 40 (s31). Together with this visualization processing request, the visualization basis data is transmitted to the visualization Web server 41 of the visualization processing system 40. Upon reception of this visualization processing request, the visualization processing system 40 executes the visualization process shown in FIG. 5 (s32), and transmits a visualized image file as a visualization processing result to the main Web server 11 (s33). The individual user management program 113a of the main Web server 11 stores the received visualized image file in the user-dependent database 114a (s34).

The main Web server 11 transmits the obtained visualized image file to the user A terminal 51 (s41). On the user A terminal 51, the display device 56 displays a visualized image based on the visualized image file (s42). In this manner, user A can confirm a desired visualized image.

Also, archive data such as the calculation basis data, external process data, visualization basis data, visualized image file, and the like are stored in the archive database 115 in association with the user ID, visualization job ID, and the like every time such data is received by the main Web server 11. More specifically, the individual user management program 113a outputs such archive data to the user main management program 111 before it is cleared. The user main management program 111 stores the archive data in the archive database 115. In this manner, re-use of the visualized image is allowed. Note that the storage timing of the archive data in the archive database 115 is not particularly limited as long as the data is stored before the individual user management program 113a is cleared.

The visualized image can be either a still image or moving image. When the visualized image is a moving image, processes from (s5) to (s42) are repeated at an update rate of the moving image or a speed close to that rate. In this repetition process, the processes from (s5) to (s14) can be omitted.

The external process is executed before the simulation and visualization process. Alternatively, the external process may be executed after the simulation and before the visualization process. Also, another external process may be executed after the visualization process. Furthermore, the external process may be shared by a plurality of external processing systems, which may execute a plurality of external processes.

### [Second Use Example (Archive Visualization)]

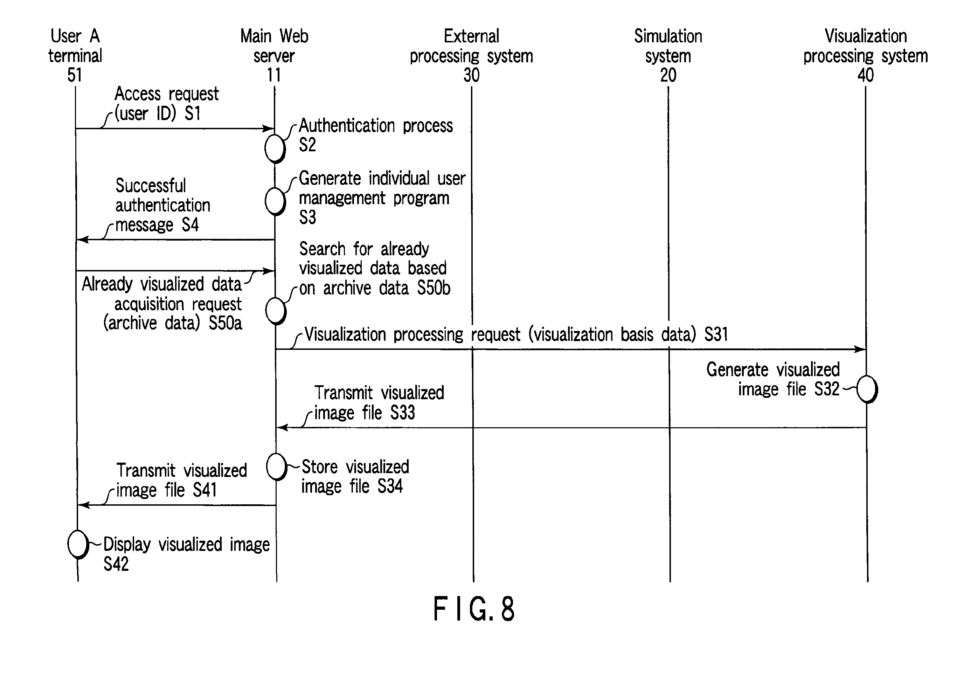

The second use example that reproduces archive data obtained in (s5), (s14), (s24), (s34), and the like when a visualized image has already been in the sequence shown in FIG. 7 will be explained below using the sequence chart shown in FIG. 8. In the first example shown in FIG. 7, the visualized image file is stored in the archive database 115. However, the second example will be explained under the assumption that the archive database 115 can only store visualization basis data in terms of its storage capacity or the like.

As shown in FIG. 8, since the sequence from (s1) to (s4) is common to that in FIG. 7, a detailed description thereof will be omitted.

Together with the successful authentication message in (s4), the display device 56 displays a main window provided based on data sent from the main Web server 11 or by the main program. This main window prompts user A to select one of "generation of new data" and "reproduction of archive data". If user A has selected "reproduction of archive data" on the main window, the display device 56 then displays an archive data identification information input window. If user A has input data on this archive data identification information input window using the input device, or if data recorded on the storage device 59 or a recording medium in advance is read out, archive data identification information is transmitted to the main Web server 11, thus issuing an archive data reproduction request to the main Web server 11 (s50a). The archive data identification information is not particularly limited as long as it can identify the already calculated archive data, and corresponds to, e.g., the user ID, visualization job ID, archive calculation basis data, and the like. The individual user management program 113a of the main Web server 11 compares the received archive data identification information with that stored in the archive database 115, and reads out hit archive data. Also, a visualization job ID is assigned to this archive data reproduction process. The visualization job ID may use that which has already been registered as the archive data identification information, or a new visualization job ID may be generated.

The obtained archive data only has a level of visualization basis data. Hence, after the processes in (s31) to (s34) common to FIG. 7 (from issuance of the visualization processing request to storage of a visualized image file) required to generate a visualized image file are executed, the obtained visualized image file is transmitted to the user A terminal 51 (s41). The display device 56 of the user A terminal 51 displays a visualized image based on that visualized image file.

In the example of FIG. 8, the visualization basis data is registered as archive data on the main Web server 11 side. However, the archive data may have a level of calculation basis data or external process data or a level of a visualized image file. Also, by giving a visualization job ID that specifies a visualization sequence which has already been done by another user in the sequence shown in FIG. 7, user A can observe a visualized image as a result visualized by that user in advance.

### [Third Use Example (Collaboration Example)]

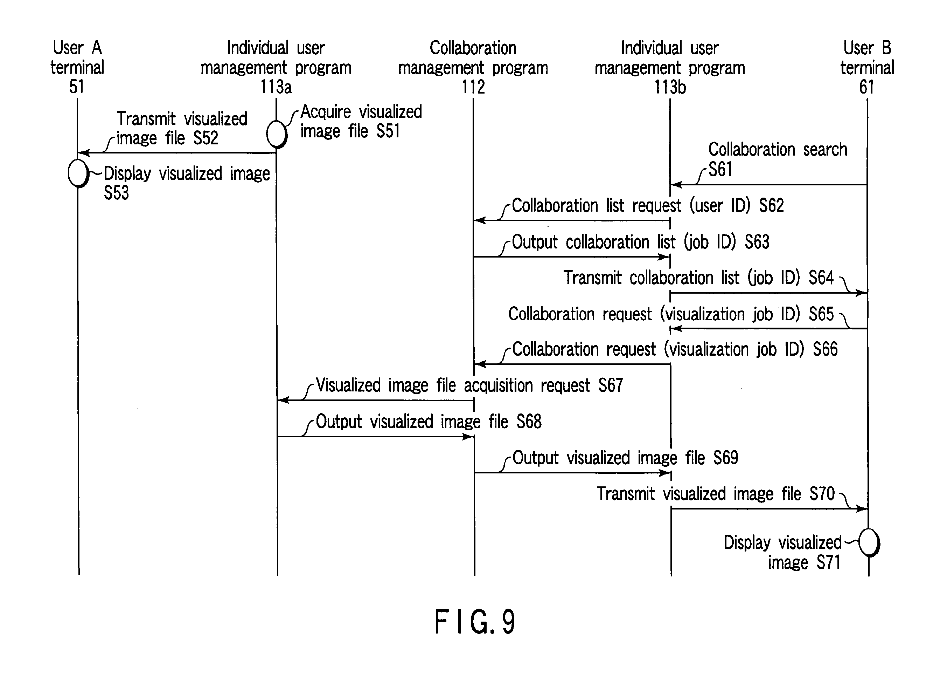

The third use example that uses the distributed processing system in collaboration will be explained below using the sequence chart shown in FIG. 9. The example of FIG. 9 will explain a case wherein user B collaborates an image of user A while user A is displaying a visualized image.

As shown in FIG. 9, assume that the visualized image file (s51), which is obtained by launching the individual user management program 113a, is transmitted to the user A terminal 51 (s52), and a visualized image is displayed on the display device 56 of the user A terminal 51 (s53) in the sequence shown in FIG. 7 or 8. Also, the user B terminal 61 has finished the authentication process, and displays a main window.

If user B of the user B terminal 61 has selected "collaboration" other than "generation of new data" and "reproduction of archive data" on the main window shown in FIG. 7 or 8, the user B terminal 61 issues a collaboration search request to the main Web server 11 (s61). In response to this collaboration search request, the individual user management program 113b of the main Web server 11 issues a collaboration list request to the collaboration management program 112 (s62).

Together with this list request, the user ID that identifies user B is output to the collaboration management program 112. The collaboration management program 112 searches for visualization jobs open to user B on the basis of the user ID. This search may be made based on a collaboration password, which is set in advance, in place of the user ID. The collaboration management program 112 generates a collaboration list which indicates a list of visualization jobs that can be open to user B of those which are being executed, and outputs that list to the individual user management program 113b (s63).

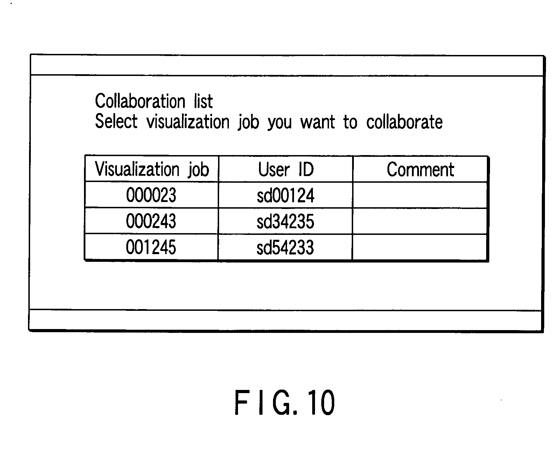

The individual user management program 113b transmits this collaboration list to the user B terminal 61 (s64). FIG. 10 shows a screen display example that includes the collaboration list. As shown in FIG. 10, visualization jobs which are now being executed are identifiably displayed in association with "visualization job ID", "user ID", "comment", and the like.

The display device of the user B terminal 61 displays the collaboration list, as shown in FIG. 10. User B selects a desired visualization job from this list. In this example, assume that user B selects a visualization job which is being executed by user A. Upon selection of the visualization job, the user B terminal 61 issues a collaboration request to the individual user management program 113b (s65). Together with this collaboration request, the visualization job ID of the job which is being executed by user A is transmitted. Upon reception of this collaboration request, the individual user management program 113b further issues a collaboration request to the collaboration management program 112 (s66). Together with this collaboration request, the visualization job ID of the job which is being executed by user A is transmitted. Upon reception of the collaboration request, the collaboration management program 112 specifies a collaboration destination on the basis of the visualization job ID transmitted together with that request. The collaboration management program 112 issues a visualized file acquisition request to the individual user management program 113a as the collaboration destination (s67).

In response to this visualized image file acquisition request, the individual user management program 113a reads out a visualized image file from the user-dependent database 114a, and outputs it to the collaboration management program 112 (s68). Furthermore, the collaboration management program 112 outputs the acquired visualized image file to the individual user management program 113b (s69). The individual user management program 113b transmits the acquired visualized image file to the user B terminal 61 (s70). The display device of the user B terminal 61 displays a visualized image by the image display program on the basis of the visualized image file (s71). This collaboration process can be applied to collaboration of either a still image or moving image. In case of a moving image, the processes from (s67) to (s71) or from (s68) to (s71) can be repeated at an update rate of the moving image or a speed close to that rate.

In this manner, a plurality of users can simultaneously share execution data of one calculation, and can simultaneously confirm each other's visualized images in real time. Therefore, each user can use a visualized image regardless of a user assigned to a terminal used by that user.

As described above, according to this embodiment, a plurality of members can smoothly communicate with each other in association with the observation results obtained based on various angles and parameters by a plurality of users. As a result, a collaborative research using 3D images can be efficiently conducted.

Since the main Web server 11 consolidates programs that manage users, data, and the like, and programs required to execute a simulation, external process, visualization process, and the like are distributed, distribution of the programs and consolidation of data can be realized, thus allowing sharing and re-use of data.

The present invention is not limited to the aforementioned embodiment. The network arrangement shown in FIG. 1 is merely an example. For example, in the above arrangement, the simulation system 20, external processing system 30, and visualization processing system 40 are respectively assigned to the LANs 2 to 4. However, the present invention is not limited to such specific arrangement. These systems may be connected to independent LANs for respective programs, or Web servers, management programs, and execution programs may be connected to independent LANs. Also, databases may be connected to still another LAN as a database server. The user main management program 111, collaboration management program 112, individual user management programs 113a and 113b, user-dependent databases 114a and 114b, and archive data 115 may be connected to independent computers via the network 1000 or LAN.

Furthermore, individual building components which are connected via the network 1000 in FIG. 1 may be combined. For example, the external Web server 31 and simulation Web server 21 may be replaced by a single Web server. That is, a distributed processing form can be changed as needed in correspondence with that to be actually used.

In the above embodiment, data are exchanged by transmitting or receiving them between computers connected via the network. However, if such computers are not connected via the network, transmission and reception of data may be replaced by output and input of data.

In the above embodiment, data communications on the network 1000 are implemented using the HTTP protocol. However, the present invention is not limited to such specific protocol. The present invention can be applied to data communications using protocols other than the HTTP protocol.

In the above embodiment, the visualization processing system 40 converts visualization basis data into a visualized image file. For example, the visualization processing program 43 may be installed in the user A terminal 51 or user B terminal 61, and may execute a visualization process based on visualization basis data transmitted from the individual user management program 113a or 113b of the main Web server 11 to generate a visualized image file. When a simulation can be directly executed from calculation basis data, the need for execution of the external process in the external processing system 30 may be obviated.

The visualized image file may be a data file which contains image data described in a data description format that allows a display device of a computer to display an image using commercially available image display software without requiring any special software. Or the visualized image file may be a data file which is described using image parameters that allow a display device of a computer to display an image using special software, although commercially available image display software cannot display an image.

In this embodiment, the simulation system 20, external processing system 30, and visualization processing system 40 execute most of various data processes in response to the requests from the terminal 51 or 61. However, some of processes executed by these systems 20, 30, and 40 may be executed by the terminal 51 or 61. In this case, programs that implement processes may be delivered to the terminal 51 or 61 as recording media or via the network 1000.

In this embodiment, the distributed processing system is used in the atmosphere-ocean simulation. However, the present invention is not limited to such specific simulation. The present invention can be applied to every network systems in which 3D space processes are executed, and a plurality of users share identical screen contents. For example, the present invention can be applied to an online action game which is played by a plurality of users in real time while sharing visualized images that have undergone the 3D space processes. When the present invention is applied to, e.g., the online action game, not only the simulation results but also an operation instruction obtained from an arbitrary terminal by an arbitrary user is input in real time. By repeating the processes in (s5) to (s42) shown in FIG. 7 in real time using that operation instruction as the aforementioned calculation basis data, the screen contents which change time by time in response to such operation instructions can be shared.

Even when a simulation that does not use any 3D space process is made, a network system that shares identical screen contents can be established.

Data communications among computers may be either wireless or wired communications.

As described above, according to the present invention, sharing and re-use of data are allowed.

## Claims

1. A visualization processing system **characterized by** comprising:
a plurality of terminals (51, 61) each of which comprises an image display device that makes a display device display a visualized image on the basis of visualized image data;
user management means (111, 113a, 113b), connected to the plurality of terminals (51, 61) via a network (1000), for assigning visualization job IDs used to identify visualization jobs to visualization requests from the terminals (51, 61), managing the visualization jobs by associating visualized image data with the visualization job IDs, and controlling to transmit visualized image data to the terminals (51, 61); and
collaboration management means (112) for displaying selectable visualization jobs, visualized images of which are being displayed on any of the plurality of terminals (51, 61), on the display device of the terminal (51, 61) to prompt a terminal user to select a desired visualization job, and issuing an acquisition request of visualized image data associated with the visualization job ID selected by the terminal user to the user management means (111, 113a, 113b).

2. A system according to claim 1, **characterized in that**:
the user management means (111, 113a, 113b) receives calculation basis data corresponding to the visualization job from the terminal (51, 61), outputs a request of a simulation processing based on the calculation basis data to acquire visualization basis data, and issues a visualization process request based on the visualization basis data to acquire visualized image data.

3. A system according to claim 2, **characterized by** further comprising:
external processing means (33) for generating simulation basis data on the basis of an instruction from the user management means (111, 113a, 113b) and the calculation basis data, and outputting the simulation basis data to the user management means (111, 113a, 113b);
simulation means (23) for generating visualization basis data on the basis of an instruction from the user management means (111, 113a, 113b) and the simulation basis data, and outputting the visualization basis data to the user management means (111, 113a, 113b); and
visualization processing means (43) for generating visualized image data on the basis of an instruction from the user management means (111, 113a, 113b) and the visualization basis data, and outputting the visualized image data to the user management means (111, 113a, 113b).

4. A system according to claim 1, **characterized in that**:
the user management means (111, 113a, 113b) is connected to a user-dependent database (114a, 114b) which stores the visualization job IDs and the visualized image data in association with each other for each terminal (51, 61), and stores input/output information with the terminal (51, 61) for each terminal.

5. A visualization processing system **characterized by** comprising:
a plurality of terminals (51, 61), each of which comprises visualization processing means (43) for executing a visualization process on the basis of visualization basis data, and generating visualized image data, and an image display device for making a display device display a visualized image on the basis of the visualized image data;
user management means (111, 113a, 113b), connected to the plurality of terminals (51, 61) via a network (1000), for assigning visualization job IDs used to identify visualization jobs to visualization requests from the terminals (51, 61), managing the visualization jobs by associating visualized image data with the visualization job IDs, and controlling to transmit visualized image data to the terminals (51, 61); and
collaboration management means (112) for displaying selectable visualization jobs, visualized images of which are being displayed on any of the plurality of terminals (51, 61), on the display device of the terminal (51, 61) to prompt a terminal user to select a desired visualization job, and issuing an acquisition request of visualized image data associated with the visualization job ID selected by the terminal user to the user management means (111, 113a, 113b).

6. A visualization processing method **characterized by** comprising:
assigning a visualization job ID used to identify a visualization job to a visualization request, which is input from a terminal (51, 61) with a display device via a network (1000), in response to the visualization request, and registering visualized image data in association with the visualization job ID;
displaying selectable visualization jobs, visualized images of which are being displayed on any of a plurality of terminals, on the display device of the terminal to prompt a terminal user to select a desired visualization job;
acquiring visualized image data associated with the visualization job ID selected by the terminal user;
controlling to transmit visualized image data to the terminals (51, 61); and
making the terminal (51, 61) display a visualized image on the display device on the basis of the visualized image data.

7. A computer program product for a visualization process, the computer program product **characterized by** comprising:
a computer readable storage medium having computer program code embodied in said medium, said computer readable program code comprising:
a first computer readable program code which assigns a visualization job ID used to identify a visualization job to a visualization request, which is input from a terminal (51, 61) with a display device via a network (1000), in response to that visualization request, manages visualized image data in association with the visualization job ID, and makes the terminal (51, 61) transmit visualized image data;
a second computer readable program code which displays selectable visualization jobs, visualized images of which are being displayed on any of a plurality of terminals (51, 61), on the display device of the terminal (51, 61) to prompt a terminal user to select a desired visualization job; and
a third computer readable program code which acquires visualized image data associated with the visualization job ID selected by the terminal user.
